# EUROPEAN PATENT APPLICATION

(11) **EP 3 179 349 A1**
(43) Date of publication of application: **14.06.2017**
(21) Application number: 16198668.2
(22) Date of filing: 14.11.2016
(51) Int. Cl.: G06F 3/044

(54) **TOUCH SCREEN APPLIANCE DISPLAY HAVING A COUPLED PHYSICAL ELEMENT**

(30) Priority: 10.12.2015 US 201514965145
(71) Applicant: Whirlpool Corporation, Benton Harbor, MI 49022 (US)
(72) Inventor: Glotzbach, Mark E., 21025 Comerio (IT); Jeffery, Randell L., 21025 Comerio (IT); Schuh, Eric J., 21025 Comerio (IT)
(74) Representative: Guerci, Alessandro

(57) **Abstract**

A touch screen user interface display (10) has a capacitive touch screen (12) with at least one sensing field (20). A conductive physical element (18) that is external to the capacitive touch screen and electrically coupled to the at least one sensing field of the capacitive touch screen is provided to extend the sensing field beyond the touch screen.

## Description

### BACKGROUND

A user interface is a device where interaction between users and machines occurs. The interaction may provide uni- or bi-directional communication between the user and the machine, for example, by allowing the user to control operation of the machine on the user's end, and by allowing the machine to provide feedback or information to the user. Increasingly, appliances provide a touch screen interface for user input and control.

### BRIEF SUMMARY

The invention relates to a display comprising a capacitive touch screen having one or more sensing fields. There is also a conductive physical element external to the capacitive touch screen that is electrically coupled to a sensing field of the capacitive touch screen such that the conductive physical element has the sensing field.

### BRIEF DESCRIPTION OF THE DRAWINGS

In the drawings:
FIG. 1 is a schematic front view of a first embodiment of a user interface display.
FIG. 2 is a side view of the display of FIG. 1.
FIG. 3 is a side view of a second embodiment of a physical element for the display of FIG. 1 wherein the physical element has a planar portion.
FIG. 4 is a side view of a cross-section of a third embodiment of a physical element for the display of FIG. 1 wherein the physical element is flush with the touch screen cover.
FIG. 5 is a side view of a fourth embodiment of a physical element for the display of FIG. 1 wherein the physical element has a rounded portion.

### DETAILED DESCRIPTION

While the invention may be implemented in any apparatus or device having a user interface (UI) for providing interaction between a human user and a machine, it is currently exemplified to be implemented in a home appliance, non-limiting examples of which may include a dishwasher, laundry washer, refrigerator, or oven. Each appliance may comprise a UI coupled with a controller such that the interaction between the user and the appliance may define or perform a cycle of operation in response to the interaction. Other relevant applications include a touch screen on a remote control device.

Increasingly, control devices for appliances provide a touch screen interface for user input and control. These touch screen displays can have a plurality of icons representing a variety of information. This variety of icons and their represented information and instructions can present a multiplication of choices for the user. Simplification may aid the user. Physical elements external to the touch screen may aid the user in simplifying use of the interface. These external physical elements can require additional electronics and/or a separate touch controller to drive physical elements external to the screen. By incorporating an external physical element with at least partially conductive composition, the physical element can be electrically coupled to the touch screen's sensing fields such that it assumes touch sensitive capabilities without the need for any additional electronics or controllers.

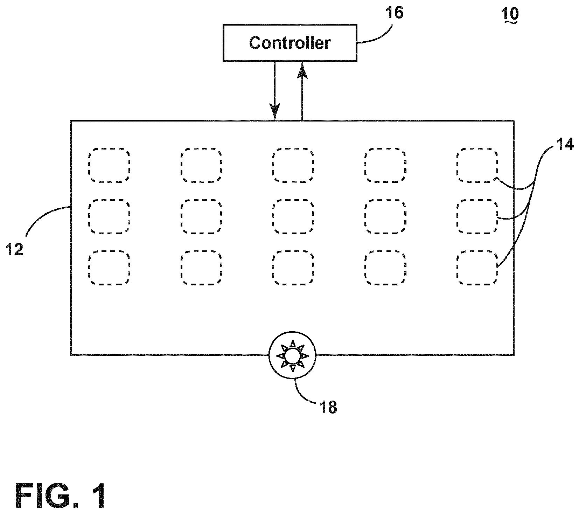

FIG. 1 illustrates a schematic front view of a touch screen UI display 10 according to a first embodiment. The touch screen display 10 includes a capacitive touch screen 12 having a plurality of touch-sensitive inputs, which can be capacitive touch keys 14, to provide a user an interface for initiating a device action. The touch screen 12 may be any of a variety of known types, including for example, a thin film transistor liquid crystal display with any of plurality of known technologies for recognizing touch, including but not limited to resistive sensing, capacitive sensing, projected capacitance, infrared, acoustic, or 3D. The touch keys 14 are in electrical communication with a controller 16 by way of discrete touch-sensitive areas or buttons. The capacitive touch keys 14 can act as capacitive switches or buttons for selecting an action or toggling a state of operation of the appliance. For the touch screen display 10 shown in FIG. 1, the touch keys 14 are shown as an array of buttons distributed uniformly throughout the display 10. Touch keys 14 may be distributed throughout the display 10, or grouped into one of more zones based on characteristics that may include functionality, ergonomics, or aesthetics. Other arrangements of touch keys 14 are contemplated and are typically arranged based upon the system design requirements. The system design requirements may include limitations imposed by the deployed touch screen technology, the desired aesthetics of the graphic user interface, and the form factor of the touch screen 12.

The display 10 is provided with a conductive physical element 18. The physical element 18 may be located at the lower edge of the display 10, or anywhere else on the display, external to the capacitive touch screen 12, and is non-removably attached to the display 10 (here, the front). The physical element 18 can be at least partially metallized in composition and can have a shape that is square, rectangular, circular, or any other shape. Non-limiting examples of the physical element 18 include a button or a center jewel control. Alternatively, the physical element 18 can be at least partially composed of a nonmetal conductive material. The physical element 18 at least partially overlaps the touch screen 12. The physical element can, but is not required to, completely overlap with the touch screen 12. The physical element 18 has no direct electrical communication with the controller 16, nor does the physical element 18 have additional electronics to provide touch sensitive function.

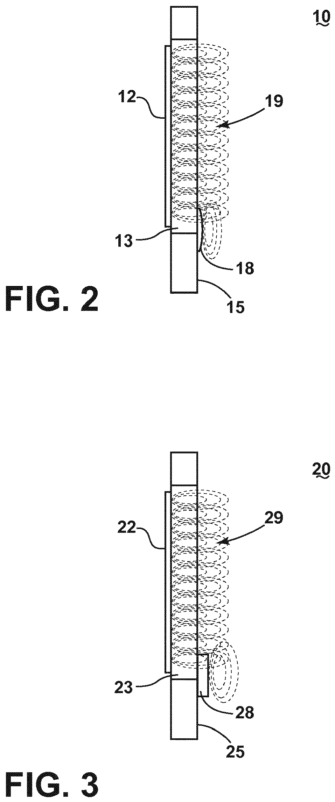

FIG. 2 is a side view of the display 10 of FIG. 1. The touchscreen 12 is located behind an opaque window 13. The window 13 is contained within a front cover 15. The front cover 15 may be composed of glass, plastic, or other suitable material. The physical element 18 is shown at its location at the lower end of the touchscreen 12, attached to the front surface of the window 13 and the front cover 15 such that the physical element 18 only partially overlaps the dimensions of the touch screen 12. Sensing fields 20, preferably one per touch key 14, project forward and outwardly from the touch screen 12 over an area of substantially the same shape and dimensions as the touch screen 12. The sensing fields 20 preferably cover the entire surface of the physical element 18 and overlap each other. The physical element 18, being conductive, overlaps one or more sensing fields 20 and thus extends its own sensing field 20.

An overview of the operation of the touch screen 12 will now be described. The capacitive touch keys 14 may be disposed on the touch screen panel 12 in a discrete and static arrangement of electrodes. That is, each capacitive touch key 14 may be a single touch sensor, often called a touch switch, including one or more electrodes capable of outputting a signal indicative of a touch event but not a touch location. While the location of a capacitive touch switch may remain static, the function of the control may be flexibly programmable to invoke any number of functions on the electronic device. Alternatively, the touch screen panel 12 may have a virtual arrangement of capacitive touch keys. In other words, the touch screen panel 12 may include an array of interconnected electrode elements capable of outputting a signal indicative of both a touch event and touch location. In contrast to an array of capacitive touch switches, virtual touch controls may be dynamically sized and placed on a touch screen panel during operation of the touch screen interface.

An electronic device with a touch screen interface may include a touch screen panel 12 where some set of the touch keys 14 are discrete capacitive touch switches and another set of the touch keys 14 are virtual touch controls. The arrangement of the touch switches and the virtual touch controls may be completely integrated such that the user is presented with the impression of a single monolithic interface. Conversely, a more heterogeneous arrangement is contemplated where the touch switches are placed in proximity to the virtual touch controls, but the controls do not appear visually integrated. In this way, certain functions of the electronic device such as powering the device on or off or activating a cycle of operation may be activated by touching a touch switch and state-dependent functions may be accessible by a virtual touch control.

Regardless of the particular implementation of the touch keys 14, the controller 16 in communication with the touch screen panel 12 and its associated touch keys 14 may process the touch screen inputs, initiate an action to be taken by the appliance and provide a response to the touch screen panel 12. The feedback response may include a visual, audible or haptic acknowledgement of the user selection and an update of the touch screen interface display 10 based on the current state of the appliance. For example, when a user contacts the touch keys 14, a signal is sent to the controller 16 to process the touch screen input as a user selection and, in response to the detecting of the user's touch, the controller 16 may communicate information to the user or initiate an action, such as a cycle of operation for an appliance.

A touch screen panel 12 may sense touch by one of a variety of different methods. Classified by the measured phenomenology indicative of a touch, types of touch screen panels include capacitive, resistive, surface acoustic wave, and infrared. In the case of the capacitive touch screen panel 12 as implemented herein, touching the surface of the touch screen 12 results in a measurable distortion of the screen's electrostatic sensing field 20, measurable as a change in capacitance. Because the physical element 18 has an at least partially conductive composition, the physical element 18 becomes electrically coupled to the sensing field 20 of the capacitive touch screen 12, such that the physical element 18 assumes touch sensitive functionality without having a touch controller or additional electronics of its own.

Although the physical element 18 only partially overlaps the touch screen 12 and its sensing field 20, the conductive composition of the physical element 18 allows the sensing field 20 to be emitted over the entire surface of the physical element 18, even where it does not physically overlap the boundaries of the touch screen 12. Because the physical element 18 is able to assume the functionality of the touch screen 12 by conducting the sensing field 20 of the touch screen 12, the user can generate an input to the controller 16 by touching the physical element 18, without being required to apply force to or physically depress the physical element 18.

FIG. 3 illustrates a second embodiment of the display 20. The physical element 28 is non-removably attached to the external face of the plastic or glass front cover 25 and the window 23, such that the physical element 28 protrudes out from the external face of the display 20. The physical element 28 has a planar portion in the form of a flat front surface 29 such that the sides of the physical element 28 and the front surface 29 of the physical element 28 are substantially perpendicular to one another.

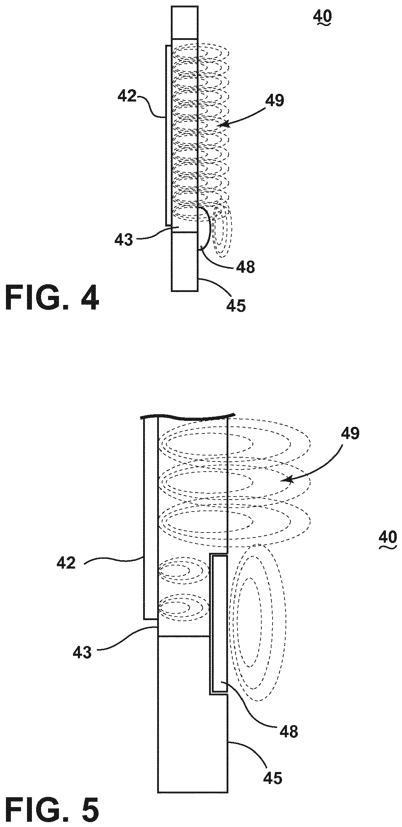

FIG. 4 illustrates a third embodiment of the display 30. The physical element 38 is non-removably attached as an insert to the plastic or glass front cover 35 and the window 33, recessed into the front cover 35 and the window 33 such that the planar portion in the form of the flat front surface 39 of the physical element 38 is flush with the external face of the plastic or glass front cover 25 and the window 23. The sides of the physical element 38 and the front surface 39 of the physical element 38 are substantially perpendicular to one another. The front surface 39 of the physical element and the external face of the display 30 form an unbroken flat profile.

FIG. 5 illustrates a fourth embodiment of the display 40. The physical element 48 is non-removably attached to the external face of the plastic or glass front cover 45 and the window 43, such that the physical element 48 protrudes out from the external face of the display 40, projecting away from the capacitive touch screen 42. The physical element 48 has a rounded portion in the form of a rounded front surface 49. The rounded front surface 49 protrudes out from the external face of the display 40. Although FIG. 5 illustrates the physical element 48 as being attached to the external face of the front cover 45 and the window 43, the physical element 48 with the rounded front surface 49 could alternatively be provided as an insert to the plastic or glass front cover 45 and the window 43 such that the physical element 48 is at least partially recessed into the external face of the display 40.

The embodiments described herein illustrate the advantages of having a physical element electrically coupled to at least one sensing field of a capacitive touch screen. The physical element may take on a variety of shapes and attachment profiles, adding flexibility to the display design of appliances. Further, there are no additional electronics or connections to the controller needed to enable touch sensitivity of the physical element, so production and materials costs can be reduced.

In this specification and the appended claims, the singular forms "a," "an" and "the" do not exclude the plural reference unless the context clearly dictates otherwise. Further, conjunctions such as "and," "or," and "and/or" used in this specification and the appended claims are inclusive unless the context clearly dictates otherwise. For example, "A and/or B" includes A alone, B alone, and A with B; "A or B" includes A with B, and "A and B" includes A alone, and B alone. Further still, connecting lines or connectors shown in the various figures presented are intended to represent example functional relationships and/or physical or logical couplings between the various elements. It should be noted that many alternative or additional functional relationships, physical connections or logical connections may be present in a practical device. Moreover, no item or component is essential to the practice of the embodiments disclosed herein unless the element is specifically described as "essential" or "critical".

Moreover, terms such as, but not limited to, generally, approximately, substantially, etc. are used herein to indicate that a precise value, shape or amount is not required, need not be specified, etc. For example, a first value being approximately a second value means that from a practical implementation perspective they can be considered as if equal. As used herein, such terms will have ready and instant meaning to one of ordinary skill in the art.

While the invention has been specifically described in connection with certain specific embodiments thereof, it is to be understood that this is by way of illustration and not of limitation. Reasonable variation and modification are possible within the scope of the forgoing disclosure and drawings without departing from the spirit of the invention which is defined in the appended claims.

## Claims

1. A display comprising a capacitive touch screen (12) having at least one sensing field (20) **characterized by**:
a conductive physical element (18) external to the capacitive touch screen and electrically coupled to the at least one sensing field of the capacitive touch screen;
wherein the conductive physical element extends the at least one sensing field beyond the touch screen.

2. The display of claim 1 wherein the conductive physical element (18) is least partially metallized in composition.

3. The display of claim 2 wherein the conductive physical element (18) is one of a square, a rectangular, or a circle in a cross section.

4. The display of claim 3 wherein the conductive physical element (18) is attached to a cover (25, 35) over the capacitive touch screen.

5. The display of claim 4 wherein the conductive physical element (18) has a planar portion (29).

6. The display of claim 5 wherein the conductive physical element (18) is attached to an external face of a cover (25, 35) over the capacitive touch screen.

7. The display of claim 5 wherein the conductive physical element (18) has a planar portion (29) that is flush with the external face of a cover (25, 35) over the capacitive touch screen.

8. The display of claim 4 wherein the conductive physical element (18) has a rounded portion (49) that projects away from the capacitive touch screen.

9. The display of claim 8 wherein the conductive physical element (18) is attached to the external face of a cover (25, 35) over the capacitive touch screen.

10. The display of claim 8 wherein the conductive physical element (18) is at least partially recessed into the external face of a cover (25, 35) over the capacitive touch screen.
